# EUROPÄISCHE PATENTSCHRIFT

(11) **EP 0 584 781 B1**
(45) Veröffentlichungstag und Bekanntmachung des Hinweises auf die Patenterteilung: **05.06.1996**
(21) Anmeldenummer: 93113479.5
(22) Anmeldetag: 24.08.1993
(51) Int. Cl.: B60R 21/22

(54) **Gassack-Rückhaltesystem für Fahrzeuge**
Airbag restraining system for vehicles
Système de retenue à coussin d'air pour véhicules

(30) Priorität: 25.08.1992 DE 9211423 U
(43) Veröffentlichungstag der Anmeldung: 02.03.1994
(73) Patentinhaber: TRW Occupant Restraint Systems GmbH, D-73553 Alfdorf (DE)
(72) Erfinder: Stütz, Michael, D-73565 Spraitbach (DE)
(74) Vertreter: Degwert, Hartmut, Dipl.-Phys.

(56) Entgegenhaltungen:
- FR-A- 2 227 979
- GB-A- 2 191 450
- US-A- 4 966 388
- PATENT ABSTRACTS OF JAPAN vol. 016, no. 111 (M-1223)18. März 1992 & JP-A-03 281 459 (MAZDA MOTOR CORP.) 12. Dezember 1991

## Beschreibung

Die Erfindung betrifft ein Gassack-Rückhaltesystem für Fahrzeuge, bei dem der Gassack bei einem Fahrzeugaufprall durch automatisches Aufblasen über wenigstens einen Teil der Fläche des Seitenfensters hinweg entfaltbar ist und einen seitlichen Aufprallschutz für einen Fahrzeuginsassen bildet.

Aus der US-Patentschrift 4 966 388 ist ein solches Gassack-Rückhaltesystem bekannt. Es ist unterhalb eines Fensters einer Fahrzeugtür in deren Verkleidung so untergebracht, daß bei entfaltetem Gassack ein wesentlicher Teil der Fläche des Fensters abgedeckt ist, wodurch die Schutzwirkung für den Fahrzeuginsassen bereitgestellt werden soll. Der Gassack wird im entfalteten Zustand am Rahmen des Fensters fixiert. Zu diesem Zweck ist entlang dem Rahmen ein Befestigungsstreifen angeordnet, und zu diesem Befestigungsstreifen komplementäre Haftstreifen sind an dem Gassack so angeordnet, daß sie bei entfaltetem Gassack mit dem Befestigungsstreifen in Eingriff gelangen. Der Befestigungsstreifen und die Haftstreifen sind vorzugsweise die beiden Teile eines Klettverschlußsystems. Durch die Anordnung des Gassacks unterhalb des Fensters ist es erforderlich, daß der Gassack ein relativ großes Volumen hat, damit auch eine Schutzwirkung für den Kopf des Fahrzeuginsassen erzielt wird. Durch dieses große Volumen ergibt sich zuerst eine relativ großen Aufblaszeit für den Gassack. Weiterhin kann bei einem solchen großen Gassack der Entfaltungsvorgang kaum beeinflußt werden. Schließlich nimmt die Eigensteifigkeit eines Gassacks mit zunehmender Größe ab. Daher ist bei dem in der genannten US-Patentschrift offenbarten Gassack-Rückhaltesystem das Klettverschlußsystem vorgesehen, welches den Gassack im entfalteten Zustand stabilisiert.

Dagegen schlägt die Erfindung ein Gassack-Rückhaltesystem vor, dessen Gassack im inaktivierten Zustand in einem Gehäuse am Rahmen eines Fahrzeug-Seitenfensters zusammengefaltet ist. Dieses Gehäuses des Gassacks ist an einer durch zwei winklig zusammentreffende Rahmenabschnitte des Seitenfensters gebildeten Ecke angeordnet. Entlang der genannten Rahmenabschnitte erstrecken sich zwei langgestreckte Führungselemente. An jedem dieser Führungselemente ist in seiner Längsrichtung mindestens ein Halteelement für den Gassack verschiebbar geführt. Die Halteelemente sind entlang zwei den Rahmenabschnitten entsprechenden Seitenrändern des Gassacks an diesem befestigt. Da der Gassack gemäß der Erfindung direkt am Rahmen des Fensters angeordnet ist, ist sein Volumen im entfalteten Zustand vergleichsweise gering. Somit ist auf die zum Aufblasen des Gassacks notwendige Zeit relativ kurz. Durch die Führungsstangen kann der Entfaltungsvorgang des Gassacks so gesteuert werden, daß sich in möglichst kurzer Zeit eine optimale Schutzwirkung für den Fahrzeuginsassen ergibt.

Wenn der Gassack zusammengefaltet ist, sind alle Halteelemente an der dem Gehäuse des Gasbag-Systems zugewandten Seite der Führungselemente zusammengeschoben und zweckmäßigerweise im Gehäuse verborgen. Die Führungselemente bilden zusammen mit den Halteelementen eine Zwangsführung für die Entfaltung des Gassacks. Im entfalteten Zustand ist der Gassack zweidimensional an den Führungselementen aufgehängt. Daher findet der Gassack auch bei fehlender Seitenscheibe ein wirksames Widerlager für auf ihn wirkende Kräfte vor, zumal er in prallem Zustand eine hohe Eigensteifigkeit besitzt. Die Abstützung des Gassacks ist noch besser, wenn die Führungselemente mit Sperrkörpern versehen sind, welche die Halteelemente gegenüber einer Rückbewegung in Richtung auf das Gehäuse blockieren. Bei einer bevorzugten Ausführungsform sind die Führungselemente stangenförmig und erstrecken sich durch die ringförmig ausgebildeten Halteelemente hindurch.

Weitere Merkmale und Vorteile der Erfindung ergeben sich aus der folgenden Beschreibung einer bevorzugten Ausführungsform und aus der Zeichnung, auf die Bezug genommen wird. In der Zeichnung zeigen:
- Fig. 1: eine Teilansicht eines Fahrzeugaufbaus mit einem aufgeblasenen seitlichen Gassack vom Fahrzeuginneren aus gesehen;
- Fig. 2: ist eine Schnittansicht etwa entlang einer Linie II-II in Fig. 1, die außerdem einen Fahrzeuginsassen zeigt; und
- Fig. 3: ist eine Schnittansicht einer Führungsstange mit einer Sperrverzahnung.

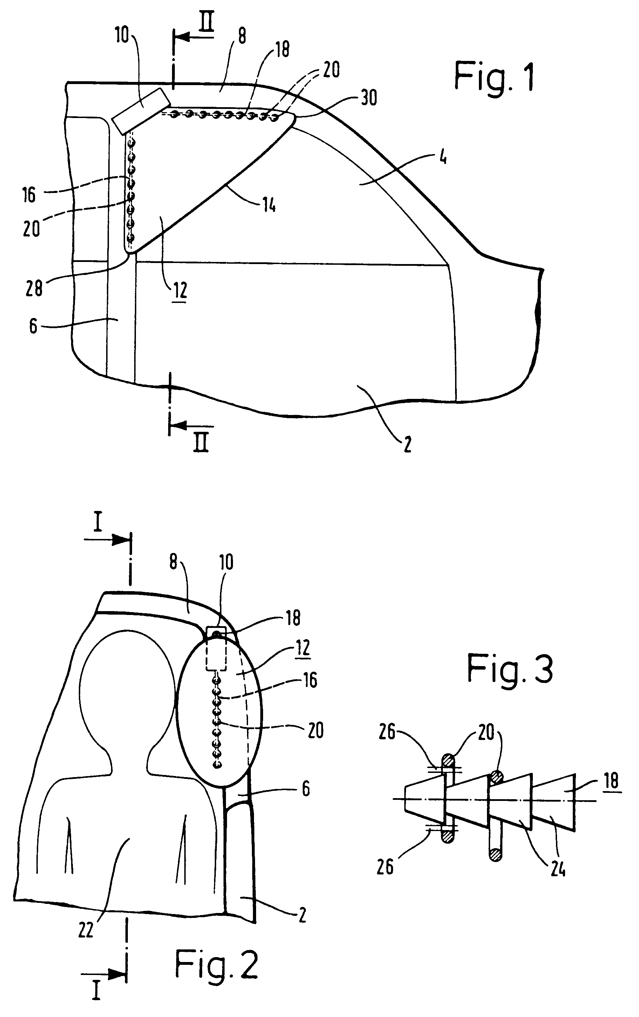

Der in Fig. 1 gezeigte Teilabschnitt eines Fahrzeugaufbaus 2 umfaßt ein Seitenfenster 4, welches das in Fahrtrichtung vordere oder das in Fahrtrichtung hintere Fenster sein kann. Eine B-Säule 6 und ein Dachabschnitt 8 des Fahrzeugaufbaus bilden zwei zueinander rechtwinklige Rahmenabschnitte des Seitenfensters 4, an deren Schnittpunkt ein Gehäuse 10 für eine nicht gezeigte Aufblasvorrichtung und für einen Gassack 12 befestigt ist. Der Gassack 12 ist im inaktivierten Zustand des Systems im Gehäuse 10 zusammengefaltet. In Fig. 1 und 2 ist er im entfalteten Zustand gezeigt, in dem er im wesentlichen eine dreieckige Fläche über dem Seitenfenster ausfüllt. Zwei Seiten der dreieckigen Luftsackfläche verlaufen parallel zu der B-Säule 6 und dem Dachabschnitt 8. Ihre dritte Seite ist ein vom Gehäuse 10 abgewandter Rand 14 des Gassacks 12.

Zwei Führungsstangen 16 und 18, Rundstäbe aus Metall, sind am Fahrzeugaufbau 2 befestigt. Die Führungsstange 16 verläuft parallel zu der B-Säule 6, die Führungsstange 18 parallel zu dem Dachabschnitt 8. Auf jede Führungsstange 16, 18 sind mehrere ringförmige Halteelemente 20 aus Textilmaterial, Kunststoff oder Metall aufgeschoben. Die Halteelemente 20 sind leichtgängig entlang der Führungsstangen 16 und 18 beweglich. Ferner sind die Halteelemente 20 am Gassack 12 entlang den beiden Seiten des Gassacks 12, die im gezeigten aufgeblasenen Zustand parallel zu den Führungsstangen 16, 18 verlaufen, befestigt, beispielsweise festgenäht.

Der prall aufgeblasene Gassack 12 bildet zusammen mit den Halteelementen 20 und den Führungsstangen 16 und 18 ein relativ starres System, das auch bei nicht an Ort und Stelle befindlicher Seitenscheibe geeignet ist, einen Fahrzeuginsassen 22 zuverlässig vor den bei einem seitlichen Aufprall möglichen Verletzungen zu bewahren, wie Fig. 2 verdeutlicht, in der im übrigen gleiche Bezugszeichen wie in Fig. 1 verwendet sind.

Das System ist noch steifer, wenn die Führungsstangen 16 und 18 mit Sperrkörpern versehen sind. Bei Verwendung von runden Führungsstangen 16 und 18 ist es vorteilhaft, sie im Schnitt wie in Fig. 3 gezeigt auszubilden, also mit einer rotationssymmetrischen Sägezahnstruktur. Die jeweils kegelstumpfförmigen Sperrkörper 24 behindern nicht die Ausdehnung des Gassacks, verhindern aber zuverlässig, daß sich die ringförmigen Halteelemente 20 nach der Entfaltung des Gassacks 12 in Richtung auf das Gehäuse 10 zurückbewegen können. Der Innendurchmesser der Halteelemente 20 ist etwas größer als der äußere Durchmesser der Führungsstangen 16 und 18. Das resultierende Spiel 26 erleichtert den Entfaltungsvorgang des Gassacks 12, der weiter unten beschrieben wird.

Aufgrund der Sperrkörper kann der durch die Führungsstangen 16 und 18 aufgespannte Luftsack 12 nur relativ wenig aus seiner Idealposition ausgelenkt oder verschoben werden. Insbesondere gibt der in Fig. 1 gezeigte Rand 14 des Gassacks 12 bei Belastung nur wenig nach, zumal er aufgrund der Massenträgheit der Halteelemente 20 bei der raschen Entfaltungsbewegung vorgespannt sein kann. Der Rand 14 verläuft zwischen Endpunkten 28 und 30 der Führungsstangen 16 und 18 diagonal durch das Seitenfenster 4.

Bei einem Seitengassack-System ohne Führungsstangen und Halteelemente, dessen Gehäuse aus Platzgründen ebenfalls am oberen Ende der B-Säule befestigt ist, wären insbesondere kleiner gewachsene Fahrzeuginsassen 22 benachteiligt, da bei fehlender Seitenscheibe 4 der in Fig. 2 untere Rand des Gassacks 12 ohne jede Abstützung wäre. Bei dem vorliegend beschriebenen System tritt diese Benachteiligung nicht auf.

Die Führungsstangen 16 und 18 und die Halteelemente 20 bilden nicht nur eine effektive Abstützung für den aufgeblasenen Gassack 12, sondern steuern zudem seine Entfaltung. Vom zusammengefalteten Zustand aus, in dem der Gassack 12 und zweckmäßigerweise auch die an den gehäuseseitigen Enden der Führungsstangen 16 und 18 zusammengerückten Halteelemente 20 unter dem Gehäuse 10 verborgen sind, verschieben sich die Halteelemente 20 beim Aufblasen des Gassacks 12 unter gegenseitiger Abstandsvergrößerung in Richtung der Endpunkte 28 und 30 der Führungsstangen 16 und 18. Aufgrund dieser Zwangsführung entfaltet sich der Gassack 12 vollständig kontrolliert in der gewünschten Richtung.

Statt der bei der gezeigten Ausführungsform aufgesetzten Führungsstangen 16 und 18 für die Entfaltung und Halterung des Gassacks 12 können versenkt angeordnete Führungsschienen verwendet werden.

## Patentansprüche

1. Gassack-Rückhaltesystem für Fahrzeuge, mit einem im inaktivierten Zustand in einem Gehäuse (10) am Rahmen eines Fahrzeug-Seitenfensters (4) zusammengefalteten Gassack (12), der bei einem Fahrzeugaufprall durch automatisches Aufblasen über wenigstens einen Teil der Fläche des Seitenfensters hinweg entfaltbar ist und einen seitlichen Aufprallschutz für einen Fahrzeuginsassen (22) bildet, mit den folgenden weiteren Merkmalen:
a) das Gehäuse (10) des Gassacks (12) ist an einer durch zwei winklig zusammentreffende Rahmenabschnitte (6, 8) des Seitenfensters (4) gebildeten Ecke angeordnet;
b) zwei langgestreckte Führungselemente (16, 18) erstrecken sich fahrzeugfest jeweils entlang der genannten Rahmenabschnitte (6, 8);
c) an jedem Führungselement (16, 18) in seiner Längsrichtung verschiebbar ist mindestens ein Halteelement (20) für den Gassack (12) geführt; und
d) die Halteelemente (20) sind entlang zwei den Rahmenabschnitten (6, 8) entsprechenden Seitenrändern des Gassacks (12) an diesem befestigt sind.

2. Gassack-Rückhaltesystem nach Anspruch 1, dadurch gekennzeichnet, daß die Führungselemente (16, 18) mit Sperrkörpern (24) versehen sind, welche eine Bewegung der Halteelemente (20) von dem Gehäuse (10) fort zulassen, ihre Bewegung in entgegengesetzter Richtung aber sperren.

3. Gassack-Rückhaltesystem nach Anspruch 1 oder 2, dadurch gekennzeichnet, daß die Führungselemente (16, 18) stangenförmig sind und sich durch die ringförmig ausgebildeten Halteelemente (20) hindurch erstrecken.

## Claims

1. A gas bag restraining system for vehicles, comprising a gas bag (12) which in the inactivated position is folded up in a housing (10) on the frame of a vehicle side window (4) and which is adapted, when there is a collision, to be automatically inflated to unfold over at least a part of the area of the side window to afford lateral protection against impact for a vehicle occupant (22), and having the following further features:
a) the housing (10) of the gas bag (12) is located at one corner which is constituted by two frame sections (6, 8) of the lateral window (4), converging together at an angle;
b) two elongate guide elements (16, 18) fixed to the vehicle each extend along the respective frame section (6, 8);
c) at least one holding element (20) for the gas bag (12) is provided at each guide element (16, 18) and is adapted for sliding movement in the longitudinal direction of the guide elements; and
d) the holding elements (20) are secured to the gas bag (12) along two lateral edges of the gas bag corresponding to the frame sections (6, 8).

2. The gas bag restraining system as claimed in claim 1, characterized in that the guide elements (16, 18) are furnished with latching bodies (24) which permit a movement of the holding elements (20) away from the housing (10) while however preventing motion thereof in the opposite direction.

3. The gas bag restraining system as claimed in claim 1 or in claim 2, characterized in that the guide elements (16, 18) are rod-shaped and extend through the annularly configured holding elements (20).

## Revendications

1. Système de retenue à coussin d'air pour véhicules, avec un coussin d'air (12) replié dans un boîtier (10) sur le cadre d'une fenêtre latérale de véhicule (4), coussin d'air (12) oui peut être déployé, en cas de choc du véhicule, par un gonflage automatique, sur au moins une partie de la surface de la fenêtre latérale et offrir une protection latérale contre les chocs à un passager du véhicule (22), système de retenue caractérisé par les autres particularités suivantes:
a) le boîtier (10) du coussin d'air (12) est disposé sur un angle formé par deux sections du cadre (6, 8) de la fenêtre latérale (4) se rejoignant en angle.
b) deux éléments de guidage (16, 18) de forme allongée s'étendent, de façon solidaire du véhicule, respectivement le long des sections mentionnées du cadre (6, 8).
c) sur chaque élément de guidage (16, 18) on peut faire passer, de façon à ce qu'il puisse coulisser, au moins un élément de maintien (20) pour le coussin d'air (12) et
d) les éléments de maintien (20) sont fixés le long de deux bords latéraux du coussin d'air (12), qui correspondent aux sections du cadre (6, 8), sur ce coussin d'air (12).

2. Système de retenue à coussin d'air selon la revendication 1, caractérisé en ce que les éléments de guidage (16, 18) sont pourvus de corps de blocage (24) qui permettent aux éléments de maintien (20) de s'écarter du boîtier (10), mais bloquent leur mouvement en sens contraire.

3. Système de retenue à coussin d'air selon la revendication 1 ou 2, caractérisé en ce que les éléments de guidage (16, 18) ont la forme de tiges et s'étendent à travers les éléments de maintien (20) constitués avec une forme annulaire.
